# EUROPÄISCHE PATENTSCHRIFT

(11) **EP 3 175 539 B1**
(45) Veröffentlichungstag und Bekanntmachung des Hinweises auf die Patenterteilung: **11.09.2019**
(21) Anmeldenummer: 15753613.7
(22) Anmeldetag: 30.07.2015
(51) Int. Cl.: H02K 15/02, H02K 1/12, H02K 1/22

(54) **LAMELLENPAKET SOWIE VERFAHREN ZU DESSEN HERSTELLUNG**
LAMINATED CORE AND METHOD FOR PRODUCTION THEREOF
PAQUET DE TÔLES ET PROCÉDÉ DE FABRICATION DE CELUI-CI

(30) Priorität: 30.07.2014 DE 102014011474
(43) Veröffentlichungstag der Anmeldung: 07.06.2017
(73) Patentinhaber: Kienle + Spiess GmbH, 74343 Sachsenheim (DE)
(72) Erfinder: BAUER, Steffen, 74374 Zaberfeld (DE); BÖKER, Björn, 73733 Esslingen (DE)
(74) Vertreter: Jackisch-Kohl, Anna-Katharina
(86) Internationale Anmeldenummer: PCT/EP2015/001569
(87) Internationale Veröffentlichungsnummer: WO 2016/015869

(56) Entgegenhaltungen:
- EP-A2- 0 121 173
- WO-A1-2011/101986
- DE-A1-102012 200 101
- GB-A- 1 060 705
- JP-A- S60 134 757
- JP-A- 2001 009 532
- JP-A- 2009 072 014
- US-A- 3 465 188
- US-A- 4 085 347
- US-A- 5 168 662
- US-A1- 2013 154 434

## Beschreibung

Die Erfindung betrifft ein Lamellenpaket nach dem Oberbegriff des Anspruches 1 sowie ein Verfahren zu dessen Herstellung nach dem Oberbegriff des Anspruches 6.

Lamellenpakete werden für elektrische Maschinen eingesetzt, beispielweise als Statoren und Rotoren für Elektromotoren oder Generatoren.

Die Lamellenpakete bestehen aus übereinander angeordneten, aus einem Blechband gestanzten Lamellen.

Die Herstellung des Lamellenpaketes kann auf verschiedene Arten außerhalb oder innerhalb eines Stanzwerkzeuges erfolgen. Die aufeinander sitzenden Lamellen sind über eine erste Verbindung miteinander verbunden. Diese erste Verbindung kann eine mechanische Verbindung, eine Klebe- oder eine Schweißverbindung sein. Bei der mechanischen Verbindung werden die Lamellen mit Vorsprüngen oder Ausprägungen versehen, mit denen sie in entsprechende Ausnehmungen bzw. Vertiefungen der jeweils unteren Lamelle eingreifen. Bei einer Klebeverbindung sind die aufeinander liegenden Lamellen durch ein Klebemittel miteinander verbunden. Bei einer Schweißverbindung werden die übereinander liegenden Lamellen innerhalb des Lamellenpaketes miteinander verschweißt.

Neben Vorteilen weisen die jeweiligen aufgeführten angewendeten herkömmlichen Verbindungsarten zur Herstellung von Lamellenpaketen innerhalb der Stanzoperation auch Nachteile auf. So liegt der wesentliche Vorteil beim Stanzpaketieren im sehr schnellen Verbinden der einzelnen Lamellen zu einem Paket. Die Nachteile sind die Erzeugung von Kurzschlussbrücken innerhalb eines Paketes sowie eine geringe Zugfestigkeit.

Elektrische Kurzschlüsse werden auch bei der Herstellung des Lamellenpaketes durch Verschweißen der Lamellen verursacht. Weiterhin verformt sich das Lamellenpaket durch den Wärmeverzug in der Schweißnahtumgebung. Auch findet eine Gefügeveränderung, begründet durch die hohen Prozesstemperaturen in der Schweißzone, statt. Dies kann zu einer unkontrollierten Beeinflussung des magnetischen Flusses beim späteren Einsatz des Lamellenpaketes in der elektrischen Maschine führen.

Kurzschlussbrücken führen grundsätzlich zu magnetischem Verlust, welche die Effizienz eines Motors/Generators negativ beeinflussen.

Hergestellte Klebeverbindungen innerhalb einer Stanzoperation haben den wesentlichen Vorteil, dass diese keine Kurzschlussbrücken innerhalb eines Paketes erzeugen. Aber aufgrund der hohen Prozessgeschwindigkeit bei der Verarbeitung von Elektroblechen von bis zu 700 Hub/min-1 innerhalb der Stanzoperation ist es zwingend erforderlich, schnellhärtende Klebstoffsysteme einzusetzen. Hierzu werden Klebemittel mit einem Klebstoffsystem eingesetzt, welche dann vorzugweise durch Luftfeuchtigkeit, Temperatur oder Aktivator aushärtet.

Luftfeuchtigkeitshärtende Sekundenklebstoffe weisen keine hohe Temperaturbeständigkeit und chemische Beständigkeit auf. Die temperaturhärtenden Klebstoffe sind in der Regel sehr langsam und können nur bedingt zum Kleben der Lamellen während des Stanzens eingesetzt werden. Weiterhin muss ein hoher Aufwand für die Pakettrennung innerhalb des Stanzprozesses betrieben werden. Ebenfalls sehr aufwendig ist die thermische Trennung oder Kühlung von der Fügeeinheit zum Stanzwerkzeug und zur Stanzpresse.

Bei der Verwendung von Klebstoffsystemen in Verbindung mit einem Initiator/Aktivator erfolgt der Medienauftrag innerhalb des Stanzprozesses vorzugweise auf getrennten Seiten des Elektrobandes. Durch die Verwendung von Initiator/Aktivator können hohe Prozessgeschwindigkeiten erreicht werden. Der wesentliche Nachteil liegt in der Einhaltung des idealen Mischungsverhältnisses und der optimalen Positionierung von und zwischen dem Klebstoff und Initiator/Aktivator während des Stanzprozesses. Dieser Auftragsprozess kann nur durch einen sehr hohen technischen Aufwand und damit verbundenen sehr hohen Kosten bewerkstelligt und/oder überwacht werden. Weiterhin wird für dieses Equipment ein zusätzlicher Platz innerhalb der Stanzpresse bzw. am Stanzwerkzeug benötigt. Dadurch sinkt die Effizienz der Stanzmaschine erheblich.

Aus US 4 085 347 A ist es bekannt, aufeinander liegende Lamellen durch ein Klebemittel als erste Verbindung und durch Bolzen bzw. Schweißnähte als zweite Verbindung miteinander zu verbinden. Die Herstellung des Lamellenpaketes ist aufwändig und kostspielig. Durch Verschweißen der Lamellen können elektrische Kurzschlüsse verändert werden. Durch den Wärmeverzug in der Schweißnahtumgebung verformt sich das Lamellenpaket. In der Schweißzone kann auch eine Gefügeveränderung auftreten.

Es ist weiter bekannt (US 3 465 188 A), die Lamellen durch ein Klebeverbindung und eine Schweißverbindung sowie durch das Lamellenpaket axial durchsetzende Bolzen zusammenzuhalten.

Bei dem aus JP 2001 009532 A bekannten Verfahren wird ein Klebstoffsystem verwendet, um die Lamellen innerhalb des Lamellenpaketes miteinander zu verbinden.

Es ist weiter bekannt (US 2013/0154434 A1), die Lamellen mittels Vorsprüngen und Schweißnähten zusammenzuhalten.

Die Lamellen innerhalb des Lamellenpaketes können auch durch eine dünne Platte und vorstehende Nasen miteinander verbunden werden (JP 2009 072014 A).

Aus der WO 2011/101986 A1 ist es bekannt, aufeinanderliegende Lamellen des Lamellenpaketes mittels eines Klebstoffsystems zusammenhalten, das sich am äußeren Umfang des Lamellenpaketes in einer axial verlaufenden Vertiefung befindet. Außerdem sind die aufeinanderliegenden Lamellen über Ausprägungen formschlüssig miteinander verbunden.

Es ist weiter ein Lamellenpaket bekannt (DE 10 2012 200 101 A1), dessen Lamellen über durch Prägen ausgebildete Vertiefungen oder durch eine Verklebung miteinander verbunden sind. Zusätzlich ist eine Schweißverbindung am Außenumfang des Lamellenpaketes vorgesehen.

Es ist weiter bekannt (EP 0 121 173 A2), übereinanderliegende Lamellen über Vorsprünge formschlüssig miteinander zu verbinden und die Zwischenräume zwischen den Lamellen mit Gießharz zu füllen.

Aus GB 1 060 705 A ist ein Lamellenpaket bekannt, dessen Lamellen durch eine Klebemittel miteinander verbunden sind. Der feste Zusammenhalt der Lamellen wird durch Bolzen erreicht, die das Lamellenpaket axial durchsetzen.

Beim Lamellenpaket gemäß US 5 168 662 A sind die Lamellen des Lamellenpaketes durch eine Klebeschicht und zusätzlich mit Vorsprüngen formschlüssig miteinander verbunden.

Es ist schließlich ein Lamellenpaket bekannt (JP 60 134757 A), dessen Lamellen durch Vorsprünge formschlüssig miteinander verbunden sind.

Der Erfindung liegt die Aufgabe zugrunde, das gattungsgemäße Lamellenpaket und das gattungsgemäße Verfahren so auszubilden, dass die Lamellenpakete in einfacher Weise so hergestellt werden können, dass sie sich einerseits sehr schnell handhaben lassen, andererseits aber eine hohe Beständigkeit für die weiteren Bearbeitungsschritte aufweisen und die Effizienz im Einsatz in einer elektrischen Maschine steigert.

Diese Aufgabe wird beim gattungsgemäßen Lamellenpaket erfindungsgemäß mit den kennzeichnenden Merkmalen des Anspruches 1 und beim gattungsgemäßen Verfahren erfindungsgemäß mit den kennzeichnenden Merkmalen des Anspruches 6 gelöst.

Beim erfindungsgemäßen Lamellenpaket sind die Lamellen durch zwei Verbindungen miteinander verbunden. Die beiden Verbindungen sind so aufeinander abgestimmt, dass die Nachteile der einen Verbindung durch die Vorteile der anderen Verbindung zumindest annähernd kompensiert werden. Durch die Bündelung der Vorteile zweier Verbindungen können die Anzahl und/oder die Größe der Verbindungsstellen bei gleichbleibender Anforderung an das Lamellenpaket reduziert oder sehr hohe Anforderungen, zum Beispiel aus dem Automobilbereich, bezüglich Temperaturbeständigkeit sowie chemische Beständigkeit und geringe Geräuschentwicklung erfüllt oder gesteigert werden. Die Verbindungen, die beim erfindungsgemäßen Lamellenpaket eingesetzt werden, können gleichzeitig oder auch nacheinander innerhalb einer Stanzoperation erzeugt werden.

Die erste und die zweite Verbindung sind durch eine Stoffschlussverbindung gebildet. Dadurch wird ein besonders spaltreduziertes Lamellenpaket innerhalb einer Stanzoperation im Stanzwerkzeug erreicht. Das erste Klebstoffsystem ist ein sehr schnellhärtendes System, welches die Lamellen innerhalb des Stanzwerkzeuges bei sehr hoher Hubanzahl, beispielsweise > 650 pro/min1, zu einem Lamellenpaket verbindet. Das zweite Klebstoffsystem ist dauerbeständig und zeichnet sich beispielsweise durch seine sehr hohe Temperaturbeständigkeit und chemische Beständigkeit sowie Wärmeleitfähigkeit, Durchschlagfestigkeit und Geräuschdämmung aus. Die mindestens zwei verwendeten Klebstoffsysteme können vor dem Auftrag auf das Elektroband vorgemischt sein, oder sie werden an verschiedenen Positionen auf das Blechband aufgetragen.

Die zweite Verbindung in Form des Klebstoffsystems ist eine Stoffschlussverbindung, die in geeigneter Weise auf die Lamelle aufgebracht wird. Solange das Klebemittel aushärtet, sichert die erste Verbindung in Form des ersten Klebstoffsystems den Zusammenhalt der Lamellen innerhalb des Lamellenpaketes. Das Klebemittel kann dadurch ausreichend aushärten, so dass anschließend die erste und die zweite Verbindung des Lamellenpaketes die aufeinander liegenden Lamellen sicher zusammenhalten. Das Lamellenpaket kann dadurch problemlos gehandhabt werden, um beispielsweise eine Wicklung aufzubringen oder es zu umspritzen. Auch während des Transports des Lamellenpaketes besteht nicht die Gefahr, dass es auseinander fällt.

Die Klebeverbindung ist vorteilhaft durch mindestens einen partiellen Klebemittelauftrag gebildet. Das Klebemittel kann beispielsweise punktförmig in Tropfenform auf die Lamelle aufgebracht werden. Der Auftrag kann vorteilhaft berührungslos erfolgen.

Es ist auch möglich, das Klebemittel flächig auf die Lamelle aufzubringen.

Es ist auch möglich, dass die beiden Klebstoffsysteme an unterschiedlichen Bereichen der Lamelle vorgesehen sind.

Die Klebstoffsysteme sind vorteilhaft durch mindestens einen partiellen Klebemittelauftrag gebildet. Der Auftrag erfolgt beispielsweise punktförmig in Tropfenform auf die Lamelle; aber auch andere herkömmlichen Auftragsverfahren sind möglich. Der Auftrag kann vorteilhaft berührungslos erfolgen. Es ist auch möglich, das Klebemittel flächig auf die Lamelle aufzubringen.

Bei einer vorteilhaften Ausführungsform sind die erste und die zweite Verbindung etwa im gleichen Bereich an der Lamelle vorgesehen. Es entsteht eine Hybridverbindung durch die erste Stoffschlussverbindung (Kleben) und durch die zweite Stoffschlussverbindung (Kleben).

Die Klebeverbindung wird in vorteilhafter Weise durch zumindest einen partiellen Klebemittelauftrag gebildet. In diesem Falle erfolgt der Klebemittelauftrag nicht auf der gesamten Lamellenfläche, sondern nur partiell. Dabei erfolgt der partielle Klebemittelauftrag derart, dass ein sicherer Zusammenhalt der Lamellen im Lamellenpaket gewährleistet ist.

Beim erfindungsgemäßen Verfahren nach Anspruch 6 werden die Lamellen innerhalb des Lamellenpaketes dadurch zusammengehalten, dass auf die Unter- und/oder Oberseite zwei Klebestoffsysteme aufgebracht werden. In diesem Falle werden die Lamellenpakete ohne eine Formschlussverbindung hergestellt. Dabei werden die Klebstoffsysteme so gewählt, dass das eine Klebestoffsystem schnellhärtend ist, so dass das Teilehandling einfach möglich ist. Außerdem sichert diese Ausbildung des Klebestoffsystems den Zusammenhalt der Lamellen, solange das für das zweite Klebestoffsystem eingesetzte Klebemittel aushärtet. Dieses Klebemittel gewährleistet anschließend den sicheren Zusammenhalt der Lamellen innerhalb des Lamellenpaketes.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung eine Stanzoperation zur Durchführung des erfindungsgemäßen Verfahrens,
- Fig. 2: in schematischer Darstellung ein Stanzwerkzeug mit einer vorgeschalteten Klebeeinheit,
- Fig. 3a und 3b: eine Station in der Klebeeinheit und verschiedene Stationen im Stanzwerkzeug gemäß Fig. 2,
- Fig. 4a bis 4c: verschiedene Stufen zur Herstellung eines Lamellenpaketes nach einer ersten Ausführungsform eines nicht zur Erfindung gehörenden Verfahrens,
- Fig. 5a bis 5c: verschiedene Stufen zur Herstellung eines Lamellenpaketes nach einer zweiten Ausführungsform eines nicht zur Erfindung gehörenden Verfahrens,
- Fig. 6a und 6b: verschiedene Stufen zur Herstellung eines Lamellenpaketes nach dem erfindungsgemäßen Verfahren,
- Fig. 7a bis 7b: verschiedene Stufen zur Herstellung eines Lamellenpaketes nach einer weiteren Ausführungsform eines nicht zur Erfindung gehörenden Verfahrens.

Zur Herstellung des Lamellenpaketes wird ein Blechband 1 herangezogen, das als Coil auf einer Haspel 2 aufgewickelt ist. Das Blechband 1 kann ein beschichtetes oder nicht beschichtetes Breit- oder ein Schmalband sein.

Das Blechband 1 wird vorteilhaft durch einen Richtapparat 3 geleitet, damit in der nachfolgenden Stanzpresse 4 die Lamellen sauber aus dem Blechband 1 gestanzt werden können. In der Stanzpresse 4 befindet sich mindestens ein Stanzwerkzeug 5, dem wenigstens eine Klebeeinheit 6 vorgeschaltet, integriert oder nachgeschaltet ist.

Die Lamellen können aus dem Blechband 1 in einer oder auch mehreren Spuren so gestanzt werden, dass der Materialabfall gering ist.

Mit der Klebeeinheit 6 wird in noch zu beschreibender Stelle Klebstoff auf das Blechband so aufgebracht, dass innerhalb des Lamellenpaketes aufeinanderliegende Lamellen zuverlässig fest miteinander verbunden werden können. Der Klebstoff wird partiell auf die Lamellen aufgebracht, beispielsweise punktförmig.

In der ersten Station des Stanzwerkzeuges 5 werden die Innendurchmesser 7 gestanzt sowie die Ausprägungen 9 für die Stanzpaketierverbindung geprägt, welche die Innendurchmesser 7 mit Abstand umgeben. In der zweiten Station des Stanzwerkzeuges 5 wird eine kreisringförmige Lamelle 10 gestanzt, deren äußerer Umfang durch die gestrichelte Linie dargestellt ist. Die ausgestanzte Lamelle 10 wird aus dem Blechband 1 ausgestoßen und in eine Paketiereinheit gedrückt, in der die Lamellen in bekannter Weise aufeinanderliegend zu einem Lamellenpaket 12 geschichtet werden.

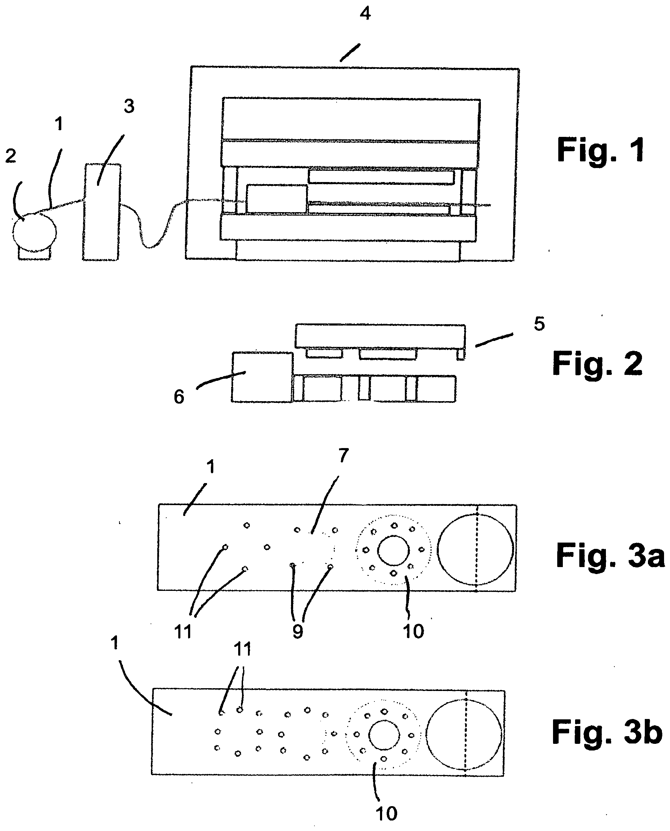

Mit dem Stanzprozess gemäß den Fig. 1 bis 3 werden Lamellenpakete hergestellt, deren Lamellen 10 durch eine Hybridverbindung innerhalb des Paketes 12 miteinander verbunden sind. Bei dieser Ausführungsform besteht die Hybridverbindung zwischen den Lamellen 10 aus einer Kraftschlussverbindung sowie einer Stoffschlussverbindung zwischen den aufeinanderliegenden Lamellen 10.

Um diese Hybridverbindung herzustellen, werden beim ersten Hub des Stanzwerkzeuges 5 das Klebemittel 11 auf das Blechband 1 an der erforderlichen Stelle aufgebracht, der Innendurchmesser 7 gestanzt sowie die Ausprägungen 9 erzeugt. Anschließend wird das Blechband um eine Vorschublänge weiter transportiert. Beim nächsten Hub der Stanzpresse 4 wird das Klebemittel 11 mittels der Klebeeinheit 6 auf die erforderliche Stelle des Blechbandes aufgebracht. In der ersten Station des Stanzwerkzeuges 5 werden der Innendurchmesser 7 gestanzt sowie die Ausprägungen 9 erzeugt und in der zweiten Stanzstation die ringförmige Lamelle 10 ausgestanzt. Sie wird in bekannter Weise aus dem Blechband 1 ausgestoßen und in die Matrize der Stanzpresse 4 nach unten gedrückt, in der die Lamellen 10 zum Lamellenpaket 12 in bekannter Weise gestapelt werden. Anschließend wird das Blechband 1 wiederum um eine Vorschublänge weitertransportiert. Dann werden beim nächsten Hub der Stanzpresse 4 das Klebemittel an der erforderlichen Stelle auf das Blechband 1 aufgebracht, in der ersten Station des Stanzwerkzeuges 5 der Innendurchmesser 7 ausgestanzt sowie die Ausprägungen 9 erzeugt und in der zweiten Stanzstation die ringförmige Lamelle 10 ausgestanzt und nach unten in die Matrize gedrückt. Auf diese Weise werden die Lamellen 10 nacheinander aus dem Blechband 1 gestanzt, das zwischen aufeinanderfolgenden Stanzhüben jeweils um eine Vorschublänge weitertransportiert wird. In der Matrize erfolgt die Verbindung der aufeinanderliegenden Lamellen 10 durch Verkleben und durch die formschlüssige Verbindung mittels der aus der Lamelle 10 herausgedrückten Ausprägungen 9.

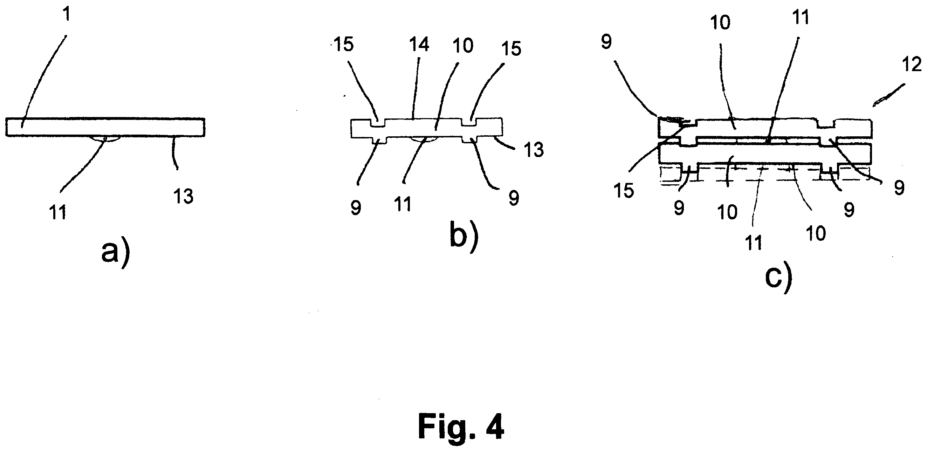

Fig. 4 zeigt in schematischer Darstellung die verschiedenen Stufen bei der Herstellung des durch die Hybridverbindung gebildeten Lamellenpaketes 12. Auf das Blechband 1 wird zunächst das Klebemittel 11 aufgebracht, das bevorzugt ein Klebemitteltropfen ist, der an den geeigneten Stellen des Blechbandes aufgetragen wird. Da die einzelnen Lamellen durch die Ausprägungen 9 innerhalb des Lamellenpaketes 10 formschlüssig miteinander verbunden sind, werden die Klebemittelpunkte 11 im Bereich außerhalb der Ausprägungen 9 am Blechband 1 angebracht. Damit das Klebemittel 11 bei der Herstellung der Ausprägungen 9 nicht stört, wird das Klebemittel zum Beispiel auf die Unterseite 13 des Blechbandes 1 aufgetragen.

Das Klebemittel 11 kann in jeder geeigneten Weise auf das Blechband 1 aufgetragen werden. Bevorzugt ist es, wenn das Klebemittel 11 berührungslos am Blechband 1 angebracht wird.

Die Ausprägungen 9 werden durch einen Verformungsvorgang erzeugt, indem entsprechende Stempel über den Umfang verteilt das Blechband 1 örtlich plastisch verformen. Die Ausprägungen 9 stehen über die Unterseite 13 des Blechbandes vor. Auf der Oberseite 14 des Blechbandes 1 werden in Höhe der Ausprägungen 9 entsprechende Vertiefungen 15 gebildet (Fig. 4b). Nach dem Ausstanzen der ringförmigen Lamellen 10 aus dem Blechband 1 werden sie in der Matrize der Stanzpresse 4 zum Lamellenpaket 12 zusammengesetzt. Die Lamellen 10 werden so aufeinandergesetzt, dass die Ausprägungen 9 der jeweils oberen Lamelle 10 in die Vertiefungen 15 der jeweils unteren Lamelle 10 eingreifen, wie dies in Fig. 4c beispielhaft für zwei aufeinanderliegende Lamellen 10 dargestellt ist. Das Klebemittel 11 befindet sich an der Unterseite 13 der jeweils oberen Lamelle 10 im Bereich außerhalb der Ausprägungen 9. So kann beispielsweise zwischen in Umfangsrichtung benachbarten Ausprägungen 9 jeweils ein Tropfen des Klebemittels 11 vorhanden sein. Das Klebemittel 11 wird so aufgebracht, dass es geringfügig dicker ist als der entstehende Spalt zwischen der jeweils unteren Lamelle 10 und der oberen Lamelle 10. Dadurch wird das Klebemittel 11 beim Zusammenfügen der Lamellen 9 verbreitert, so dass eine sichere Verklebung der aufeinanderliegenden Lamellen 9 innerhalb des Lamellenpaketes stattfindet (Fig. 4c).

Die Ausprägungen 9 sind so ausgebildet, dass sie mit Presssitz in die Vertiefungen 15 der jeweils unteren Lamelle eingreifen. Dadurch wird ein Lamellenpaket 12 gebildet, deren Lamellen 10 über die Ausprägungen 9 fest miteinander verbunden sind, wobei das Klebemittel 11 zusätzlich zur Verbindung der aufeinanderliegenden Lamellen 10 beiträgt. Die beschriebene Hybridverbindung ermöglicht, die Anzahl und/oder die Größe der Verbindungsstellen zu reduzieren, ohne dass Einschränkungen hinsichtlich der Funktionalität des hergestellten Lamellenpaketes 12 zu befürchten sind.

Das Lamellenpaket 12 wird bei der beschriebenen Ausführungsform innerhalb der Stanzpresse 4 hergestellt. Grundsätzlich kann das Lamellenpaket auch außerhalb der Stanzpresse 4 hergestellt werden. Ebenso ist es möglich, das Klebemittel nicht innerhalb, sondern außerhalb der Stanzpresse 4 auf das Blechband aufzubringen.

Beim beschriebenen Lamellenpaket 12 sind die Klebemittelpunkte 11 über den Umfang der ringförmigen Lamelle 10 verteilt vorgesehen, so dass eine sichere Klebeverbindung zwischen den aufeinanderliegenden Lamellen 10 gewährleistet ist.

Das Klebemittel 11 kann nicht nur punktförmig, sondern auch flächig auf die Lamelle 10 aufgetragen werden.

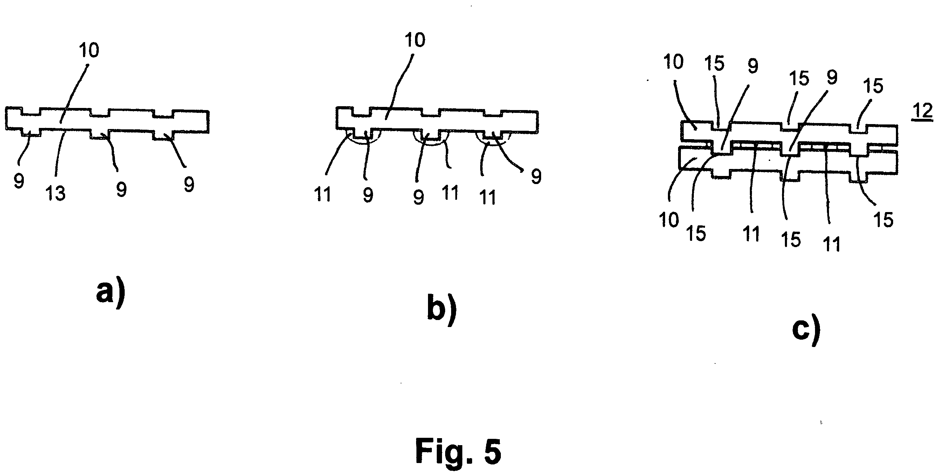

Fig. 5 zeigt eine weitere Möglichkeit einer Hybridverbindung zwischen aufeinanderliegenden Lamellen 10 innerhalb eines Lamellenpaketes 12. Bei dieser Ausführungsform werden zunächst in das Blechband 1 die Innendurchmesser 7 (Fig. 3) gestanzt sowie die Ausprägungen 9 angebracht, die über die Unterseite 13 der Lamelle 10 ragen. Erst anschließend wird das Klebemittel 11 auf die Unterseite 13 aufgebracht. Im Unterschied zur vorigen Ausführungsform wird das Klebemittel 11 im Bereich der Ausprägungen 9 auf die Unterseite 13 der Lamelle 10 aufgetragen. Dadurch werden die Ausprägungen 9 vom Klebemittel 11 umhüllt. Die Ausprägungen 9 sind wiederum über den Umfang der ringförmigen Lamelle verteilt angeordnet.

Nach dem Ausstanzen aus dem Blechband 1 werden die Lamellen 10 in der Stanzpresse 4 oder auch außerhalb von ihr zur Bildung des Lamellenpaketes 12 aufeinandergesetzt (Fig. 5c). Die Ausprägungen 9 der jeweils oberen Lamelle 10 greifen in die entsprechenden Vertiefungen 15 der jeweils unteren Lamelle 10 ein. Die Lamellen werden entsprechend der vorigen Ausführungsform unter Druck aufeinandergesetzt. Die Ausprägungen 9 greifen unter Reibschluss in die Vertiefungen 15 der jeweils unteren Lamelle 10 ein, wodurch eine kraftschlüssige Verbindung in Achsrichtung des Lamellenpaketes 12 zwischen den aufeinanderliegenden Lamellen 10 erreicht wird. Gleichzeitig wird das Klebemittel 11 beim Aufsetzen der jeweils oberen Lamelle 10 so verdrängt, dass es ebenfalls außerhalb der Ausprägungen 9 liegt und die darunterliegenden Lamellen 10 miteinander verbindet. Das Klebemittel 11 umgibt hierbei die jeweilige Ausprägung 9 (Fig. 5c).

Auch bei diesem Ausführungsbeispiel besteht die Hybridverbindung zwischen den einzelnen Lamellen 10 des Lamellenpaketes 12 aus der Form/Reibschlussverbindung zwischen den Ausprägungen 9 und den Vertiefungen 15 sowie der Klebemittelverbindung 11.

Auch bei dieser Ausführungsform kann das Klebemittel 11 innerhalb oder außerhalb der Stanzpresse 4 aufgebracht werden. Bei dieser Variante erfolgt zunächst der Prägevorgang, um die Ausprägungen 9 am Blechband 1 zu erzeugen. Erst anschließend wird das Klebemittel 11 aufgebracht. Bei der Ausführungsform gemäß Fig. 4 wird hingegen zunächst das Klebemittel 11 aufgebracht, bevor das Blechband 1 zur Herstellung der Ausprägungen 9 geprägt wird.

Die Höhe des Lamellenpaketes 12 wird dadurch festgelegt, dass eine Lamelle 10 mit Durchgangslöchern gebildet wird. Dies ist beispielhaft durch gestrichelte Linien in Fig. 4c dargestellt.

Zur Bildung des nächsten Lamellenpaketes 12 wird darum zunächst ein Deckblech gefertigt, das Durchgangslöcher aufweist. Dann können auf dieses Deckblech in der beschriebenen Weise die Lamellen aufgesetzt werden, bis wieder ein Deckblech mit Durchgangslöchern die Höhe des Lamellenstapels 12 bestimmt. Die Höhe bei dieser Ausführungsform des Lamellenpaketes 12 wird ebenfalls dadurch festgelegt, dass das verwendete Klebemittel durch Auftragsunterbrechung gebildet wird.

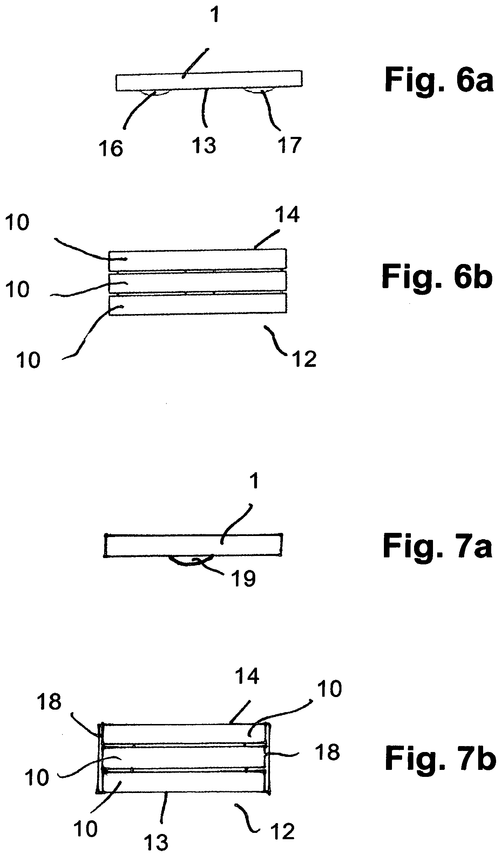

Beim Ausführungsbeispiel nach Fig. 6 wird die Hybridverbindung zwischen den aufeinanderliegenden Lamellen durch zwei Klebeverbindungen erzeugt. Im Blechband 1 werden zunächst das Klebemittel 16 und das Klebemittel 17 in der Klebeeinheit 6 im Bereich der Innendurchmesser 7 wiederum über den Umfang der ringförmigen Lamelle 10 verteilt angeordnet (Fig. 3b).
Bei dieser Ausführungsform wirkt das Klebemittel 16 als schnelle Verbindung, um ein Teilehandling des Lamellenpaketes 12 direkt nach dem Stanzen zu ermöglichen. Das Klebemittel 17 dient als dauerbeständige Verbindung mit optimalen Eigenschaften des Lamellenpaketes 12 und härtet zeitverzögert im Spalt zwischen der oberen Lamelle 10 und der unteren Lamelle 10 des Lamellenpaketes 12 aus.

Der Auftrag der zwei Klebemittel 16 und 17 kann bei dieser Ausführungsform innerhalb der Stanzpresse 4, aber auch außerhalb von ihr erfolgen. Das Klebemittel 16 wird vorzugsweise punktuell auf die obere Lamellenseite 14 und/oder untere Lamellenseite 13 berührungslos aufgetragen. Das Klebemittel 17 wird vorzugsweise flächig auf die obere Lamellenseite 14 und/oder untere Lamellenseite 13 aufgetragen. Die entstandene Stoffschlussverbindung aus dem Klebmittel 16 kann von der zweiten Stoffschlussverbindung, entstanden aus dem Klebemittel 17, vollständig zwischen der unteren Lamelle 10 und oberen Lamelle 10 umschlossen sein. Das Klebemittel 16 und das Klebemittel 17 können bei einer günstigen Ausführungsform miteinander vermischt sein. Das Vermischen der zwei Klebemittel 16 und 17 beziehungsweise Klebstoffsysteme kann innerhalb der Stanzoperation oder außerhalb erfolgen.

Auch bei der Herstellung des Blechpaketes aus zwei stoffschlüssig miteinander verbundenen Lamellen 10 werden in einem ersten Hub der Stanzpresse 4 das Klebemittel 16 und/oder Klebemittel 17 auf das Blechband 1 aufgebracht und der Innendurchmesser 7 angebracht. Anschließend wird es um eine Vorschublänge weitertransportiert. Mit dem nächsten Hub der Stanzpresse 4 werden die zwei Klebemittel 16 und 17 erneut auf das Blechband 1 aufgebracht, der Innendurchmesser 7 in der ersten Station in des Stanzwerkzeuges 5 gestanzt und in der zweiten Station des Stanzwerkzeuges die Lamelle 10 aus dem Blechband 1 geschnitten.

Die Höhe bei dieser Ausführungsform des Lamellenpaketes 12 wird dadurch festgelegt, dass die verwendeten Klebemittel durch Auftragsunterbrechung gebildet werden. Dadurch kann auf der obersten Lamelle 10 keine nachfolgende Lamelle 10 befestigt werden.

Beim Ausführungsbeispiel nach Fig. 7 wird die Hybridverbindung zwischen den aufeinanderliegenden Lamellen 10 durch Schweißverbindungen 18 und eine Klebeverbindung 19 erzeugt. Im Blechband 1 wird zunächst das Klebemittel 19 in der Klebeeinheit 6 an der erforderlichen Stelle auf das Blechband aufgetragen (Fig. 7a).

Bei dieser Ausführungsform wirkt die Schweißverbindung 18 als schnelle Verbindung, um ein Teilehandling des Lamellenpaketes 12 direkt nach dem Stanzen zu ermöglichen. Das Klebemittel 19 dient als dauerbeständige Verbindung mit optimalen Eigenschaften des Lamellenpaketes 12 und härtet zeitverzögert im Spalt zwischen der jeweils oberen Lamelle 10 und der jeweils unteren Lamelle 10 des Lamellenpaketes 12 aus.

Der Auftrag der Schweißnaht 18 erfolgt in der Fügeeinheit des Stanzwerkzeuges. Der Auftrag des Klebemittels 19 kann bei dieser Ausführungsform innerhalb der Stanzpresse 4, aber auch außerhalb von ihr erfolgen. Das Klebemittel 19 wird vorzugsweise punktuell auf die obere Lamellenseite 14 und/oder untere Lamellenseite 13 berührungslos aufgetragen.

Die Höhe des Lamellenpaketes 12 wird bei dieser Ausführungsform dadurch festgelegt, dass der Auftrag der Schweißnaht und des Klebemittels unterbrochen wird. Dadurch kann auf der obersten Lamelle 10 des Lamellenpaketes 12 keine nachfolgende Lamelle 10 befestigt werden.

Die beschriebene Hybridverbindung ermöglicht, die Anzahl und/oder die Größe der Verbindungsstellen zu reduzieren, ohne dass Einschränkungen hinsichtlich der Funktionalität des hergestellten Lamellenpaketes 12 zu befürchten sind.

Bei den beschriebenen Ausführungsbeispielen sind die Lamellen 10 nur beispielhaft als Ringe dargestellt. Die Lamellen können selbstverständlich jede andere geeignete Form haben. So können auf die beschriebene Weise Einzelzähne zu Einzelzahnpaketen gestapelt werden, wobei die Einzelzahnpakete anschließend zu einem Statorpaket oder Rotorpaket zusammengefügt werden. Solche Lamellenpakete werden beispielhaft für Rotoren und/oder Statoren von Elektromotoren eingesetzt.

Die Lamellen können aber auch beispielhaft E-Form oder Kamm-Form oder weitere freie Formen aufweisen.

Bei den beschriebenen Ausführungsformen können die unterschiedlichen Verbindungsarten der Lamellen 10 untereinander gleichzeitig oder auch zeitlich nacheinander erzeugt werden. Auch können diese unterschiedlichen Verbindungsarten an der gleichen oder an unterschiedlichen Stellen im Lamellenpaket 12 vorgesehen werden. Bei Hybridverbindungen, die eine Klebeverbindung sowie die Kraftschlussverbindung aufweisen, ermöglichen die Reibschluss/Formschlussverbindungen 9, 15 bereits dann eine gute Handhabbarkeit des Lamellenpaketes, wenn das Klebemittel noch nicht vollständig ausgehärtet ist. Die geringe Zugfestigkeit der Kraftschlussverbindung 9, 15 wird durch die höhere Zugfestigkeit der Klebeverbindung ausgeglichen. Umgekehrt wird die geringe Schlag- und Schälfestigkeit der Klebeverbindung durch den Form/Kraftschluss zwischen den Ausprägungen 9 und den Vertiefungen 15 benachbarter Lamellen 9 ausgeglichen. Bei Hybridverbindungen, die zwei Stoffschlussverbindungen aufweisen, können die jeweiligen Klebsystemeigenschaften kombiniert werden, wodurch eine sehr schnelle und dauerhafte Verbindung zwischen den Lamellen erzeugt wird. Bei der Hybridverbindung, die zwei Stoffschlussverbindungen aus Schweißen und Kleben aufweisen, können ebenfalls die jeweiligen Eigenschaften kombiniert werden, wodurch eine schnelle und dauerhafte Verbindung zwischen den Lamellen erzeugt wird.

## Patentansprüche

1. Lamellenpaket (12) mit übereinander angeordneten Lamellen (10), die jeweils über eine erste Verbindung (16) und über eine zweite Verbindung (17) miteinander verbunden sind, von denen die erste Verbindung eine Stoffschlussverbindung in Form eines Klebstoffsystems (16) ist, mit dem aufeinanderliegende Lamellen (10) miteinander verbunden sind, **dadurch gekennzeichnet, dass** die zweite Verbindung (17) eine zweite Stoffschlussverbindung in Form eines Klebstoffsystems (17) ist, mit dem aufeinanderliegende Lamellen (10) miteinander verbunden sind, und dass das erste Klebstoffsystem (16) schnellhärtend und das zweite Klebstoffsystem (17) dauerbeständig ist.

2. Lamellenpaket nach Anspruch 1,
**dadurch gekennzeichnet, dass** die beiden Klebstoffsysteme (16, 17) etwa im gleichen Bereich der Lamellen(10) vorgesehen sind.

3. Lamellenpaket nach Anspruch 1,
**dadurch gekennzeichnet, dass** die beiden Klebstoffsysteme (16, 17) an unterschiedlichen Bereichen der Lamelle (10) vorgesehen sind.

4. Lamellenpaket nach einem der Ansprüche 1 bis 3,
**dadurch gekennzeichnet, dass** das erste Klebstoffsystem (16) punktuell aufgebracht ist.

5. Lamellenpaket nach einem der Ansprüche 1 bis 4,
**dadurch gekennzeichnet, dass** das zweite Klebstoffsystem (17) flächig aufgebracht ist.

6. Verfahren zur Herstellung eines Lamellenpaketes (12) nach einem der Ansprüche 1 bis 5, bei dem aus einem Blechband (1) in einer Stanzpresse (4) Lamellen (10) gestanzt werden, die anschließend zu einem Lamellenpaket (12) gestapelt werden, wobei auf die Unter- und/oder Oberseite (13, 14) der Lamellen (10) ein erstes Klebstoffsystem (16) aufgebracht wird, **dadurch gekennzeichnet, dass** auf die Unter- und/oder Oberseite (13, 14) der Lamellen (10) ein zweites Klebstoffsystem (17) aufgebracht wird, von denen das erste Klebstoffsystem (16) schnellhärtend und das zweite Klebstoffsystem (17) dauerbeständig sind.

7. Verfahren nach Anspruch 6,
**dadurch gekennzeichnet, dass** die Klebstoffsysteme (16, 17) innerhalb der Stanzpresse (4) aufgetragen werden.

8. Verfahren nach Anspruch 6,
**dadurch gekennzeichnet, dass** die Klebstoffsysteme (16, 17) außerhalb der Stanzpresse (4) aufgetragen werden.

9. Verfahren nach einem der Ansprüche 6 bis 8,
**dadurch gekennzeichnet, dass** das erste Klebstoffsystem (16) punktuell auf die obere und/oder untere Lamellenseite (14, 13) berührungslos aufgetragen wird.

10. Verfahren nach einem der Ansprüche 6 bis 9,
**dadurch gekennzeichnet, dass** das zweite Klebstoffsystem (17) flächig auf die obere Lamellenseite (14) und/oder untere Lamellenseite (13) aufgetragen wird.

11. Verfahren nach einem der Ansprüche 6 bis 10,
**dadurch gekennzeichnet, dass** in einem ersten Hub der Stanzpresse (4) das erste Klebstoffsystem (16) und/oder das zweite Klebstoffsystem (17) auf das Blechband (1) aufgebracht und ein Innendurchmesser (7) angebracht wird, dass das Blechband (1) anschließend um eine Vorschublänge weitertransportiert wird, dass mit dem nächsten Hub der Stanzpresse (4) die beiden Klebstoffsysteme (16, 17) erneut auf das Blechband (1) aufgebracht, der Innendurchmesser (7) in der ersten Station des Stanzwerkzeuges (5) gestanzt und in einer zweiten Station des Stanzwerkzeuges die Lamellen aus dem Blechband (1) geschnitten werden.

## Claims

1. Laminated core (12) having lamellae (10) arranged above one another, which are connected to one another in each case by means of a first connection (16) and by means of a second connection (17), of which the first connection is a material-bonding connection in the form of an adhesive system (16), using which lamellae (10) lying on top of one another are connected to one another, **characterized in that** the second connection (17) is a second material-bonding connection in the form of an adhesive system (17), using which lamellae (10) lying on top of one another are connected to one another, and **in that** the first adhesive system (16) is fast-curing and the second adhesive system (17) is durable long-term.

2. Laminated core according to Claim 1,
**characterized in that** the two adhesive systems (16, 17) are provided in approximately the same region of the lamellae (10).

3. Laminated core according to Claim 1,
**characterized in that** the two adhesive systems (16, 17) are provided at different regions of the lamellae (10).

4. Laminated core according to one of Claims 1 to 3,
**characterized in that** the first adhesive system (16) is applied punctually.

5. Laminated core according to one of Claims 1 to 4,
**characterized in that** the second adhesive system (17) is applied in a plane manner.

6. A method for the production of a laminated core (12) according to one of Claims 1 to 5, in which lamellae (10) are punched from a sheet-metal strip (1) in a punching press (4), which lamellae are subsequently stacked to form a laminated core (12), a first adhesive system (16) being applied onto the bottom and/or top side (13, 14) of the lamellae (10),
**characterized in that** a second adhesive system (17) is applied onto the bottom and/or top side (13, 14) of the lamellae (10), of which the first adhesive system (16) is fast-curing and the second adhesive system (17) is durable long-term.

7. Method according to Claim 6,
**characterized in that** the adhesive systems (16, 17) are applied inside the punching press (4).

8. Method according to Claim 6,
**characterized in that** the adhesive systems (16, 17) are applied outside the punching press (4).

9. Method according to one of Claims 6 to 8,
**characterized in that** the first adhesive system (16) is applied in a punctiform manner onto the upper and/or lower lamella side (14, 13) in a contactless manner.

10. Method according to one of Claims 6 to 9,
**characterized in that** the second adhesive system (17) is applied extensively onto the upper lamella side (14) and/or the lower lamella side (13).

11. Method according to one of Claims 6 to 10,
**characterized in that**, in a first stroke of the punching press (4), the first adhesive system (16) and/or the second adhesive system (17) is applied onto the sheet-metal strip (1) and an internal diameter (7) is applied, **in that** the sheet-metal strip (1) is subsequently transported further by a feed length, **in that**, with the next stroke of the punching press (4), the two adhesive systems (16, 17) are applied again onto the sheet-metal strip (1), the internal diameter (7) is punched in the first station of the punching tool (5) and the lamellae are cut from the sheet-metal strip (1) in a second station of the punching tool.

## Revendications

1. Empilage de lamelles (12), pourvu de lamelles (10) superposées, qui sont assemblées mutuellement respectivement par l'intermédiaire d'un premier assemblage (16) et par l'intermédiaire d'un deuxième assemblage (17), dont le premier assemblage est un assemblage par matière sous la forme d'un système d'agent adhésif (16), à l'aide duquel des lamelles (10) superposées sont assemblées mutuellement, **caractérisé en ce que** le deuxième assemblage (17) est un deuxième assemblage par matière sous la forme d'un système d'agent adhésif (17), à l'aide duquel des lamelles (10) superposées sont assemblées mutuellement, et **en ce que** le premier système d'agent adhésif (16) est à durcissement rapide et le deuxième système d'agent adhésif (17) est durablement résistant.

2. Empilage de lamelles selon la revendication 1, **caractérisé en ce que** les deux systèmes d'agent adhésif (16, 17) sont prévus approximativement dans la même zone des lamelles (10).

3. Empilage de lamelles selon la revendication 1, **caractérisé en ce que** les deux systèmes d'agent adhésif (16, 17) sont prévus sur différentes zones de la lamelle (10).

4. Empilage de lamelles selon l'une quelconque des revendications 1 à 3, **caractérisé en ce que** le premier système d'agent adhésif (16) est appliqué de manière ponctuelle.

5. Empilage de lamelles selon l'une quelconque des revendications 1 à 4, **caractérisé en ce que** le deuxième système d'agent adhésif (17) est appliqué en nappe.

6. Procédé, destiné à fabriquer un empilage de lamelles (12) selon l'une quelconque des revendications 1 à 5, lors duquel à partir d'une bande de tôle (1), dans une presse à estamper (4) on estampe des lamelles (10) que l'on empile par la suite en un empilage de lamelles (12), lors duquel on applique sur la face inférieure et/ou sur la face supérieure (13, 14) des lamelles (10) un premier système d'agent adhésif (16), **caractérisé en ce qu'**on applique sur la face inférieure et/ou sur la face supérieure (13, 14) des lamelles (10) un deuxième système d'agent adhésif (17), dont le premier système d'agent adhésif (16) est à durcissement rapide et le deuxième système d'agent adhésif (17) est durablement résistant.

7. Procédé selon la revendication 6, **caractérisé en ce qu'**on applique les systèmes d'agent adhésif (16, 17) à l'intérieur de la presse à estamper (4).

8. Procédé selon la revendication 6, **caractérisé en ce qu'**on applique les systèmes d'agent adhésif (16, 17) à l'extérieur de la presse à estamper (4).

9. Procédé selon l'une quelconque des revendications 6 à 8, **caractérisé en ce qu'**on applique le premier système d'agent adhésif (16) ponctuellement, sans contact sur la face supérieure et/ou sur la face inférieure de la lamelle (14, 13).

10. Procédé selon l'une quelconque des revendications 6 à 9, **caractérisé en ce qu'**on applique le deuxième système d'agent adhésif (17) en nappe sur la face supérieure de la lamelle (14) et/ou sur la face inférieure de la lamelle (13) .

11. Procédé selon l'une quelconque des revendications 6 à 10, **caractérisé en ce que** dans la première course de la presse à estamper (4), on applique le premier système d'agent adhésif (16) et/ou le deuxième système d'agent adhésif sur la bande de tôle (1) et on appose un diamètre intérieur (7), **en ce que** par la suite, on transporte ultérieurement la bande de tôle (1) d'une longueur d'avance, **en ce qu'**avec la course suivante de la presse à estamper (4), on applique une nouvelle fois les deux systèmes d'agent adhésif (16, 17) sur la bande de tôle (1), on estampe le diamètre intérieur (7) dans le premier poste de l'outil d'estampage (5) et dans un deuxième poste de l'outil d'estampage, on coupe les lamelles à partir de la bande de tôle (1).
